**Europäisches Patentamt**

**European Patent Office**

**Office européen des brevets**

(19)

(11) Publication number : **0 482 963 A2**

# EUROPEAN PATENT APPLICATION

(12)

(21) Application number : **91309936.2**

(22) Date of filing : **28.10.91**

(51) Int. Cl.⁵ : **H04L 29/06**

(30) Priority : **26.10.90 JP 288938/90**

(43) Date of publication of application :
**29.04.92 Bulletin 92/18**

(84) Designated Contracting States :
**DE FR GB**

(71) Applicant : **NEC CORPORATION**
**7-1, Shiba 5-chome Minato-ku**
**Tokyo 108-01 (JP)**

(72) Inventor : **Takahashi, Hideo**
**c/o NEC CORPORATION, 7-1 Shiba, 5-chome**
**Minato-ku, Tokyo (JP)**

(74) Representative : **Garratt, Peter Douglas et al**
**Mathys & Squire 10 Fleet Street**
**London EC4Y 1AY (GB)**

(54) **Error display system.**

(57)  An error display system applied to a control circuits of data communication is disclosed. The error display system includes a first first-in-first-out buffer memory (1) in which communication data providing one frame with a plurality of words whose one word is formed of one bit are sequentially stored for reading out the communication data in sequence of store, a second first-in-first-out buffer memory (2) in which are inputted a last word and an error display data that are composed of two bits, one bit for representing the last word of the one frame of the communication data and the other one bit for representing presence of error existing within the one frame of the communication data, wherein the first first-in-first-out buffer memory has a larger capacity than that of the one frame.

*Fig. 1*

EP 0 482 963 A2

The present invention relates to an error display system, and in particular to an error display system applied to a control circuit of data communication.

Recently, a first-in-first-out buffer memory (FIFO) which temporarily stores communication data in sequence of receiving thereof has become indispensable and is widely used.

As is well known, FIFO is a buffer memory which stores data and from which reads the data in the order where the data has been stored. Storing (write) and reading of data may be asynchronously performed.

An example of the above-mentioned communications network control is the Integrated Service Digital network (ISDN) of a digital communications network which integrally handles various kinds of services such as a telephone, a telegraphy, a telex, a data facsimile, and the like, those which are recently started of their commercial services and test services in many countries. That is a data link control procedure on the D channel (LAPD) in accordance with the layer 2 of ISDN or a high level data link control (HDLC) used in a link access procedure on B channel (LAPB).

The HDLC function is constituted of, as is well known, an automatic zero insert delete of serial received, frame check sequence (FCS) producing inspecting, and a detect of flag abort ineffective frame.

From among the above, functions are required such as the automatic zero delete, the FCS inspect, and the detect of flag abort ineffective frame.

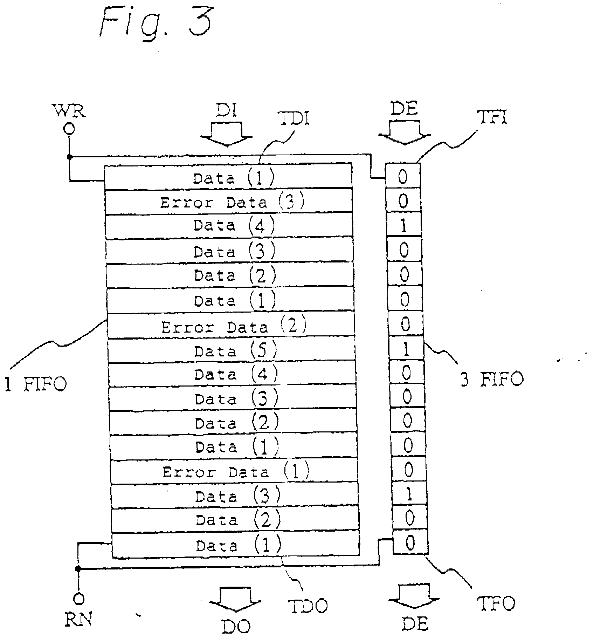

For display of the result of such inspect and detect at the receiving side, an error display system as in Fig. 3 has been widely known.

Referring to Fig. 3, the conventional error display system is composed of FIFO1 and FIFO3.

FIFO1 is for accumulation of data resulting from inspect and detect of the HDLC frame, and is formed of 16 words with word length of 1 byte.

FIFO3 is to indicate a last byte of the frame and is formed of 16 words with word length of 1 bit.

For operations of the conventional error display system refer as follows.

FIFO1 is inputted with data D1 of the HDLC frame sequentially by one bit basis from data input terminal TDI.

Concurrently, FIFO3 is imputted with last byte display data DE of the HDLC frame as one bit length data from a least byte display input terminal TFI.

The input data DI and DE are written into FIFO1 and FIFO3 by FIFO write signal WR, respectively.

The data accumulated in FIFO1 are outputted from a data output terminal TDO as a data output DO.

Further, a last byte display data DE is outputted from a last byte display output terminal TFO.

The output data DO, DE respective of FIFO1, FIFO3 are renewed by a FIFO data renewal signal input RN.

Next, if the last byte display data DE inputted from the last byte display input terminal TFI is '0' the input data D1 fed from and in same timing of the data input terminal TDI represents receiving data of its HDLC frame. If the last byte display data DE '1', then the input data DI is to indicates a last data of its frame.

A resultant data of detect inspect is accumulated in one byte next to a last data of frame.

When no error is found in this error data, such fact is written therein.

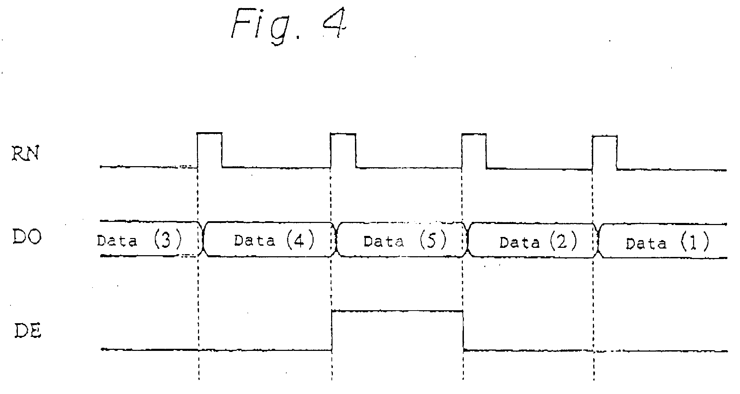

Fig. 4 is a time chart of a circuit as shown in Fig. 3.

Contents of data output DO and contents of the last byte display data DE are respectively renewed at a rise edge of the FIFO data renewal signal input RN.

In the foregoing described is one wherein, when the contents of data output DO is shown by data (5) and the last byte display data DE is '1', then error data (2) is outputted at the next rise edge.

The conventional display system described above, in shorter frame length, in order to insert error data to one byte next to the last data irrespective of presence of error of the HDLC, the amount of intrinsic receiving data that is stored in FIFO is decreased, therefore a drawback arises because a time internal of read of data from FIFO is increased.

As a consequence, disadvantage finally arises in over run error which results an an inability to write received data because data processing function is not in timing.

An error display system according to the present invention consists of a first first-in-first-out buffer memory in which communication data providing one frame with a plurality of words whose one word is formed of one bit are sequentially stored for reading out the communication data in sequence of store, a second first-in-first-out buffer memory in which are inputted the last word and an error display data that are composed of the bits, one bits for representing the last word of the one frame of the communication data and the other one bit for representing presence of error existing within the one frame of the communication data, wherein the first-in-first-out buffer memory has a larger capacity than that of the one frame.

Further, an error display system of the invention is such that, even when error display data of the second first-in-first-out buffer memory indicates presence of error, error data are not inserted in such word as next to the last word of the corresponding frame including the error contents existing therein the first first-in-first-out buffer memory.

Still further, an error display system of this invention is in that, only when error display data of the second first-in-first-out buffer memory indicates presence of error, error data are inserted in such word as next to the last word of a corresponding frame including the error contents existing wherein the first first-in-first-out buffer memory.

The invention will further be explained by way of example, with reference to the accompanying drawings, in which:-

Fig. 1 is a circuit diagram showing one embodiment of the present invention.

Fig. 2 is an operational time chart of the circuit as shown in Fig. 1.

Fig. 3 is a circuit diagram showing one example of a conventional error display system.

Fig. 4 is an operational time chart of the circuit as shown in Fig. 3.

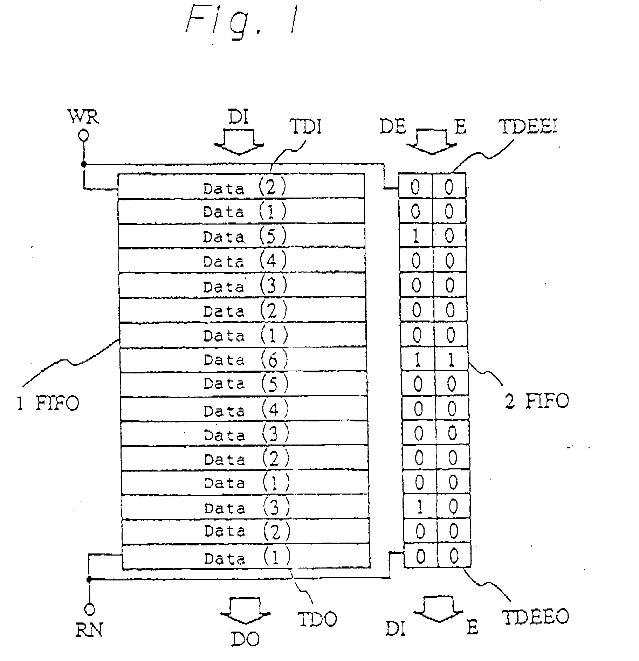

Fig. 1 is a block diagram showing one embodiment in accordance with the invention. In the drawing, symbol FIFO1 depicts a first first-in-first-out buffer memory, FIFO2 a second first-in-first-out buffer memory, and HDLC depicts a high level data link control procedure.

Referring to Fig. 1, an error display device of the invention comprises FIFO1 and FIFO2.

FIFO1 is the same as shown in the conventional example, and is formed of 16 words with word length of 1 byte for accumulating resultant data of inspect or detect of a HDLC frame.

FIFO2 is formed of 16 words with word length of an amount of 2 bits, i.e., one bit representing the last byte of the same frame as shown in the conventional example and the other one bit representing error data.

Next, operation of the embodiment is explained.

Reference symbol TDI depicts a data input terminal, DI depicts output data, TDEEI depicts last byte error display input terminal, DE depicts last byte error display data, and E depicts error display data.

As in the conventional example described above, in FIFO1 is inputted data D1 of the HDLC frame sequentially by one byte basis from a data input terminal TD1.

At the same time, FIFO2 is inputted the last byte error display data DEE of a HDLC frame of 2 bit length data from the last byte error display input terminal TDEEI.

The last byte error display data DEE is formed by combination of the last byte display data DE of one bit in the conventional example with error display data E.

The error display data E indicates, using one bit, the function representing presence of error from among error data.

A producing circuit of the last byte error display data DEE described above, not shown, in Fig. 1, may easily be constituted by well known circuit elements like a comparison circuit, a shift resistor, and the like, then explanation other than that directly relating to this invention will be omitted for avoiding redundancy.

Symbol WR depicts FIFO write signals, TDO depicts a data output terminal, DO depicts data output, TDEEO depicts a last byte error display output terminal, and NR depicts FIFO data renewal signal input.

The input data D1, DEE are respectively written into FIFO1, FIFO2 by FIFO signals WR.

Data accumulated in FIFO1 is outputted from the data output terminal TDO as data output DO.

Further, the last byte error display data DEE is outputted from the last byte error display output terminal TDEEO.

The output data DO, DEE respective of FIFO1, FIFO2 are renewed by the FIFO data renewal signal input RN.

Next, from among the last byte error display data DEE inputted from the last byte error display input terminal TDEEI, if the last byte display bit DE is '0', then the input data DI from the data input terminal TDI and in timing therewith represents receiving data of the HDLC frame thereof. If the last byte display bit DE is '1', the input data DI represents the last data of that frame.

When the last byte display bit DE is '1', and if an error display bit E from among the last byte error display data DEE is '0', this indicates no error is in HDLC frame thereof. When the error display bit E is '1', this indicates that error is present in HDLC frame thereof.

When an error report in detail is not required, only the display of the error bit E is enough, and therefore as previously explained in the conventional example, it is possible to omit the error data using one byte next to the last data of frame.

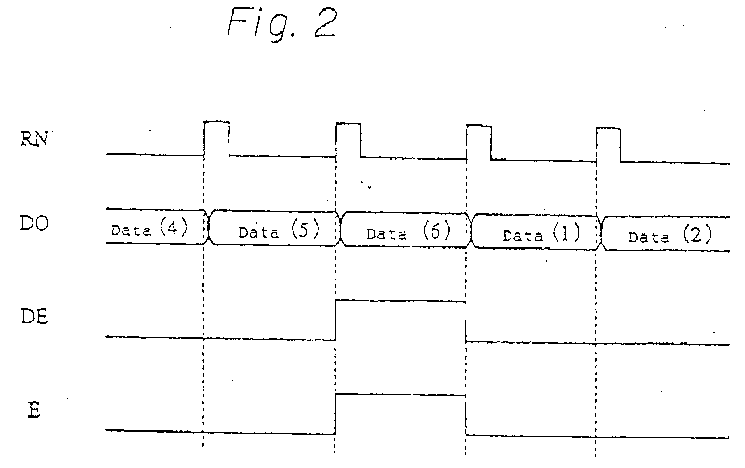

Fig. 2 is a time chart of a circuit of the present embodiment as shown in Fig. 1.

The contents of data output DO and the other contents of last byte error display data DEE are respectively renewed at a rise edge of the FIFO data renewal signal input RN.

If the the contents of data output DO is shown by data (6) and the last byte display bit DE is '1', then data (1) is outputted at a next rise edge of RN no matter whether the error bit E is '1' of '0'.

Next, a second embodiment of the invention will be explained. Symbol DE depicts a last byte display bit, DEE depicts last byte error display data, and E depicts an error display bit. Symbol HDLC depicts a high level data link control procedure.

A different point of the present embodiment comparing with the first embodiment is that; when the last byte display bit DE is '1' and is the error display bit E from among the last byte error display data DEE is '1', error exists in HDLC frame thereof, consequently error data is inserted into next to the last data of frame.

When the error bit E is '0', no error is present in HDLC thereof, therefore in this case error data is omitted.

While the invention has been shown and described with reference to preferred embodiments thereof, the invention is not limited to the embodiments in this specification and drawings and it will therefore be understood that the foregoing and other changes may be made therein without departing from the scope of the invention.

For example, the number of words in FIFO has been made 16 words for simplification of explanation, however needless to say that any number of words may be applied without departing from the subject matter of the present invention.

As shown and described in the foregoing, by way of providing a first in first out buffer memory for detecting an error bit capable of determining presence of the error in frame data, the present invention has the result that it is not necessary to insert error data into one word next to the last data of frame.

Subsequently even in shorter frame length, it is avoided to reduce the number of intrinsic receiving data which is stored in FIFO, therefore advantage lies in that the time interval required for reading out data from FIFO is not increased.

As a result of the above, advantage is effectively obtained in a reduced probability of generating an over run status resulting in an inability to write the receiving data because data processing function of FIFO is not enough.

## Claims

(1) An error display system characterized by comprising

a first first-in-first-out buffer memory in which communication data providing one frame with a plurality of words are sequentially stored for reading our the communication data in sequence of store,

a second first-in-first-out buffer memory in which are inputted a last word and an error display data that are composed of two bits, one bit for representing the last word of the one frame of the communication data and the other one bit for representing presence of error existing within the one frame of the communication data,

wherein the first first-in-first-out buffer memory has a larger capacity than that of the one frame.

(2) An error display system as claimed in claim 1, wherein even when error display data of the second first-in-first-out buffer memory indicates presence of error, error data is not inserted in such word as next to the last word of a corresponding frame including the error contents existing within the first first-in-first-out buffer memory.

(3) An error display system as claimed in claim 1, wherein only when error display data of the second first-in-first-out buffer memory indicates presence of error, error data is inserted in such word as next to a last word of a corresponding frame including the error contents existing within the first first-in-first-out buffer memory.

# Fig. 1

| | | | WR | DI | TDI | | DE E | TDEEI | | |
|---|---|---|---|---|---|---|---|---|---|---|

<table>
<tr><td colspan="2">Data (2)</td><td>0</td><td>0</td></tr>
<tr><td colspan="2">Data (1)</td><td>0</td><td>0</td></tr>
<tr><td colspan="2">Data (5)</td><td>1</td><td>0</td></tr>
<tr><td colspan="2">Data (4)</td><td>0</td><td>0</td></tr>
<tr><td colspan="2">Data (3)</td><td>0</td><td>0</td></tr>
<tr><td colspan="2">Data (2)</td><td>0</td><td>0</td></tr>
<tr><td colspan="2">Data (1)</td><td>0</td><td>0</td></tr>
<tr><td colspan="2">Data (6)</td><td>1</td><td>1</td></tr>
<tr><td colspan="2">Data (5)</td><td>0</td><td>0</td></tr>
<tr><td colspan="2">Data (4)</td><td>0</td><td>0</td></tr>
<tr><td colspan="2">Data (3)</td><td>0</td><td>0</td></tr>
<tr><td colspan="2">Data (2)</td><td>0</td><td>0</td></tr>
<tr><td colspan="2">Data (1)</td><td>0</td><td>0</td></tr>
<tr><td colspan="2">Data (3)</td><td>1</td><td>0</td></tr>
<tr><td colspan="2">Data (2)</td><td>0</td><td>0</td></tr>
<tr><td colspan="2">Data (1)</td><td>0</td><td>0</td></tr>
</table>

1 FIFO

2 FIFO

RN    DO TDO    DI E TDEEO

Fig. 2

# Fig. 3

Fig. 4